# EUROPEAN PATENT APPLICATION

(11) **EP 4 852 418 A1**
(43) Date of publication of application: **09.12.2026**
(21) Application number: 25213581.9
(22) Date of filing: 05.11.2025
(51) Int. Cl.: H04N 1/32, G06F 3/12, G03G 15/00

(54) **INFORMATION PROCESSING SYSTEM, INFORMATION PROCESSING PROGRAM, PRINTING SYSTEM, AND INFORMATION PROCESSING METHOD**

(30) Priority: 02.06.2025 JP 2025092070
(71) Applicant: FUJIFILM Business Innovation Corp., Minato-ku Tokyo (JP)
(72) Inventor: YASUDA, Akiho, Yokohama-shi, Kanagawa (JP)
(74) Representative: Becker Kurig & Partner Patentanwälte mbB

(57) **Abstract**

An information processing system includes a processor configured to: execute a printing operation of transporting, from an accommodation section that accommodates plural sets of media, each set including plural media and having a predetermined printing order, the media in sequence and printing the media in the printing order; and in a case where the printing operation is stopped during transport of a medium and the medium is removed from a transport path, discharge the media from the accommodation section until an order of the medium transported from the accommodation section when the printing operation is resumed becomes an order matching the printing order, and then resume the printing operation.

## Description

### BACKGROUND OF THE INVENTION

### (i) Field of the Invention

The present disclosure relates to an information processing system, an information processing program, a printing system, and an information processing method.

### (ii) Description of Related Art

JP2021-187138A discloses a printing system including a printing unit, an inspection unit, and a control unit. The printing unit forms an image on a sheet transported through a transport path. The inspection unit compares the image formed on the sheet transported through the transport path with a reference image to inspect the image, and records order information of the inspected sheet and order information of the sheet that has been normally discharged. In a case where a jam occurs in the transport path of the sheet, the control unit resumes the inspection after the printing is resumed, from the first sheet for which it is recorded that the inspection is not completed or the normal discharge is not completed.

JP2022-146528A discloses an inspection device that inspects printed matter by comparing the printed matter, which has been printed, with a reference image. The inspection device includes a control unit. The control unit exclusively controls, as an inspection mode of the inspection, an inspection mode between a mode for switching a discharge destination of printed matter in which a defect is recognized, and an inspection job of inspecting printed matter in which one copy consists of a plurality of pieces of printed matter or an inspection type of inspecting the printed matter having a sequential order.

JP2021-165021A discloses an inspection system including a printing device, an inspection device that inspects a quality of printed matter printed by the printing device, and an information processing device that transmits a print job to the printing device. The inspection device includes a reception unit, an inspection unit, and a transmission unit. The reception unit receives, from the printing device, a scan image obtained by scanning the printed matter printed by the printing device. The inspection unit inspects the quality of the printed matter based on a comparison between the received scan image and a reference image. The transmission unit transmits information indicating an NG inspection result to the printing device based on an inspection result obtained by the inspection unit. The printing device includes a printing unit, a notification unit, and a reception unit. The printing unit performs printing based on the print job received from the information processing device. The notification unit notifies the information processing device of a jam based on the occurrence of the jam. The reception unit receives the information indicating the NG inspection result from the inspection device. The notification unit further notifies the information processing device of the jam based on the received information indicating the NG inspection result. The information processing device includes a transmission unit that transmits a reprint job of reprinting images starting from an image corresponding to paper on which the jam has occurred to the printing device based on the received jam notification.

### SUMMARY OF THE INVENTION

As a printing operation, a printing operation of transporting, from an accommodation section that accommodates a plurality of sets of media, each set including a plurality of media and having a predetermined printing order, the media in sequence and printing the media in the printing order is considered.

In a case where the printing operation is stopped during the transport of the medium and the medium is removed from the transport path, an order of the medium transported from the accommodation section when the printing operation is resumed may not match the printing order.

Therefore, the user needs to adjust the order of the medium transported from the accommodation section when the printing operation is resumed, which requires the user's effort.

An object of the present disclosure is to reduce the user's effort as compared to a case where the user always needs to adjust the order of the media transported from the accommodation section when the printing operation is resumed.

According to a first aspect of the present disclosure, there is provided an information processing system including: a processor configured to: execute a printing operation of transporting, from an accommodation section that accommodates a plurality of sets of media, each set including a plurality of media and having a predetermined printing order, the media in sequence and printing the media in the printing order; and in a case where the printing operation is stopped during transport of a medium and the medium is removed from a transport path, discharge the media from the accommodation section until an order of the medium transported from the accommodation section when the printing operation is resumed becomes an order matching the printing order, and then resume the printing operation.

According to a second aspect of the present disclosure, in the first aspect, the processor may be configured to: execute the printing operation; and in a case where the printing operation is stopped during the transport of the medium and the medium is removed from the transport path, discharge the media from the accommodation section until the order of the medium transported from the accommodation section when the printing operation is resumed becomes an order next to an order of a completed medium on which printing is last completed before the printing operation is stopped in the printing order, and then resume the printing operation.

According to a third aspect of the present disclosure, in the second aspect, the plurality of media constituting the set of media may be printed in advance with mutually different images, and the processor may be configured to: execute the printing operation; and in a case where the printing operation is stopped during the transport of the medium and the medium is removed from the transport path, discharge the media from the accommodation section up to a medium on which an image identical to the image of the completed medium is printed in advance, and then resume the printing operation.

According to a fourth aspect of the present disclosure, in the second or third aspect, the plurality of media constituting the set of media may include a plurality of media on which an identical image is printed in advance and a different medium on which a different image from the other media is printed in advance, and the processor may be configured to: execute the printing operation; and in a case where the printing operation is stopped during the transport of the medium and the medium is removed from the transport path, discharge the media from the accommodation section up to a medium of which an order is identical to an order of the completed medium determined based on the different medium, and then resume the printing operation.

According to a fifth aspect of the present disclosure, in any one of the first to fourth aspects, the processor may be configured to: execute the printing operation; in a case where the printing operation is stopped during the transport of the medium and the medium is removed from the transport path, discharge, in a case where an adjustment instruction to adjust the order of the medium is acquired, the media from the accommodation section until the order of the medium becomes the order matching the printing order, and then resume the printing operation; and send, in a case where the adjustment instruction is not acquired, a notification to prompt a user to check the order of the medium.

According to a sixth aspect of the present disclosure, in the fifth aspect, the processor may be configured to: execute the printing operation; in a case where the printing operation is stopped during the transport of the medium and the medium is removed from the transport path, in a case where an adjustment instruction to adjust the order of the medium is acquired, discharge, in a case where the number of sheets discharged from the accommodation section is within a preset upper limit, the media from the accommodation section until the order of the medium becomes the order matching the printing order, and then resume the printing operation; and send, in a case where the number of sheets discharged from the accommodation section exceeds the preset upper limit, a notification to prompt a user to check the order of the medium.

According to a seventh aspect of the present disclosure, there is provided an information processing program causing a computer to execute a process including: executing a printing operation of transporting, from an accommodation section that accommodates a plurality of sets of media, each set including a plurality of media and having a predetermined printing order, the media in sequence and printing the media in the printing order; and discharging, in a case where the printing operation is stopped during transport of a medium and the medium is removed from a transport path, the media from the accommodation section until an order of the medium transported from the accommodation section when the printing operation is resumed becomes an order matching the printing order, and then resuming the printing operation.

According to an eighth aspect of the present disclosure, there is provided a printing system including: an accommodation section that accommodates a plurality of sets of media, each set including a plurality of media and having a predetermined printing order; a transport section that transports the media in sequence from the accommodation section; and a printing section that performs printing on the media transported in sequence from the accommodation section by the transport section in the printing order, in which the transport section discharges, in a case where the printing operation by the printing section is stopped during transport of a medium and the medium is removed from a transport path, the media from the accommodation section until an order of the medium transported from the accommodation section when the printing operation is resumed becomes an order matching the printing order, and the printing section resumes the printing operation after the transport section discharges the media from the accommodation section.

According to a ninth aspect of the present disclosure, there is provided an information processing method including: executing a printing operation of transporting, from an accommodation section that accommodates a plurality of sets of media, each set including a plurality of media and having a predetermined printing order, the media in sequence and printing the media in the printing order; and discharging, in a case where the printing operation is stopped during transport of a medium and the medium is removed from a transport path, the media from the accommodation section until an order of the medium transported from the accommodation section when the printing operation is resumed becomes an order matching the printing order, and then resuming the printing operation.

With the configuration according to the first aspect of the present disclosure, the user's effort may be reduced as compared to a case where the user always needs to adjust the order of the medium transported from the accommodation section when the printing operation is resumed.

With the configuration according to the second aspect of the present disclosure, the printing operation may be resumed from the order next to the order of the completed medium on which the printing is last completed before the printing operation is stopped in the printing order.

With the configuration according to the third aspect of the present disclosure, the order of the medium transported from the accommodation section when the printing operation is resumed may be adjusted based on the images printed in advance on the plurality of media constituting the set of media.

With the configuration according to the fourth aspect of the present disclosure, even in a case where the identical image is included in the images printed in advance on the plurality of media constituting the set of media, the order of the medium transported from the accommodation section when the printing operation is resumed may be adjusted based on the image.

With the configuration according to the fifth aspect of the present disclosure, whether the adjustment of the order of the medium transported from the accommodation section when the printing operation is resumed is executed by the device or by the user may be selected.

With the configuration according to the sixth aspect of the present disclosure, whether the adjustment of the order of the medium transported from the accommodation section when the printing operation is resumed is executed by the device or by the user may be selected depending on the number of sheets discharged from the accommodation section.

With the configuration according to the seventh aspect of the present disclosure, the user's effort may be reduced as compared to a case where the user always needs to adjust the order of the medium transported from the accommodation section when the printing operation is resumed.

With the configuration according to the eighth aspect of the present disclosure, the user's effort may be reduced as compared to a case where the user always needs to adjust the order of the medium transported from the accommodation section when the printing operation is resumed.

With the configuration according to the ninth aspect of the present disclosure, the user's effort may be reduced as compared to a case where the user always needs to adjust the order of the medium transported from the accommodation section when the printing operation is resumed.

### BRIEF DESCRIPTION OF THE DRAWINGS

Exemplary embodiment(s) of the present invention will be described in detail based on the following figures, wherein:
FIG. 1 is a schematic diagram showing an example of a printing system according to the present exemplary embodiment;
FIG. 2 is a block diagram showing an example of a control device according to the present exemplary embodiment;
FIG. 3 is a block diagram showing an example of a functional configuration of the control device according to the present exemplary embodiment;
FIG. 4 is a flowchart showing an example of a printing flow according to the present exemplary embodiment;
FIG. 5 is a diagram showing an example of a set of media according to the present exemplary embodiment and a state where an image is printed on each medium of the set of media;
FIG. 6 is a flowchart showing an example of a stop flow according to the present exemplary embodiment;
FIG. 7 is a flowchart showing an example of a resume flow according to the present exemplary embodiment;
FIG. 8 is a diagram showing an example of a setting screen for setting inspection of the set of media according to the present exemplary embodiment; and
FIG. 9 is a flowchart showing an example of an adjustment process according to the present exemplary embodiment.

### DETAILED DESCRIPTION OF THE INVENTION

Hereinafter, an exemplary embodiment of the present disclosure will be described in detail with reference to the accompanying drawings. A configuration of the exemplary embodiment is not limited to a configuration shown in the drawings. In the following description, all the drawings are schematic, and the dimensional relationships between the elements shown in the drawings, the ratios of the elements, and the like are not always consistent with the reality. In addition, the dimensional relationships between the elements, the ratios of the elements, and the like are not always consistent between the plurality of drawings.

### <Printing System 10>

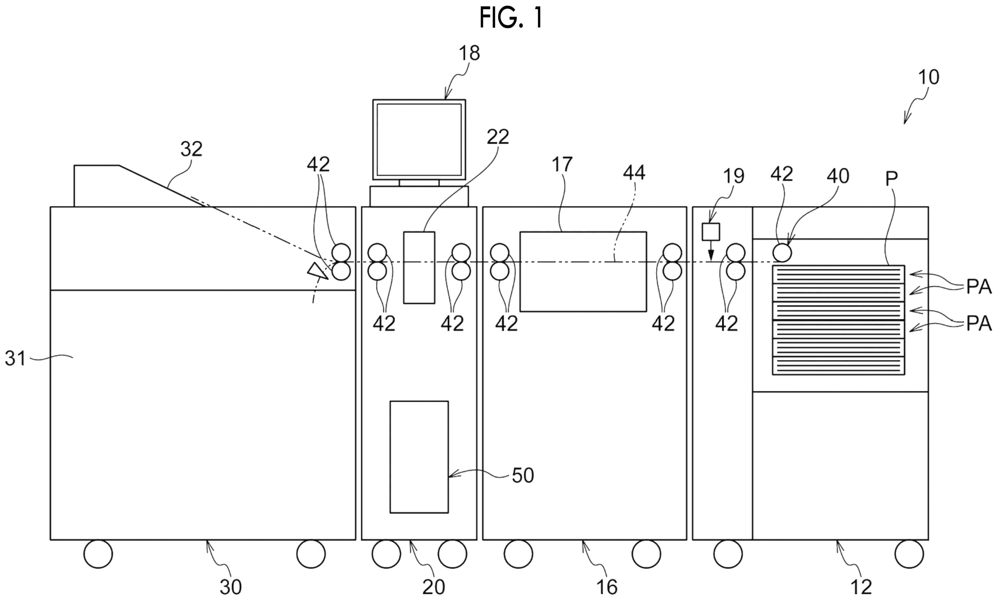

A printing system 10 according to the present exemplary embodiment will be described. FIG. 1 is a schematic diagram showing an example of the printing system 10 according to the present exemplary embodiment.

The printing system 10 is a system that performs printing on a medium P. Specifically, as shown in FIG. 1, the printing system 10 includes an accommodation device 12, a transport device 40, a printing device 16, an inspection device 20, a discharge device 30, a display section 18, a detection section 19, and a control device 50. The printing system 10 is an example of an information processing system. The control device 50 may be understood as an example of an information processing system.

### <Accommodation Device 12>

The accommodation device 12 is a device that accommodates the medium P. The accommodation device 12 is an example of an accommodation section. As shown in FIG. 1, for example, a plurality of sets of media PA, each set including a plurality of media P and having a predetermined printing order, can be accommodated in the accommodation device 12.

In the present exemplary embodiment, the medium P of each set of media PA is loaded on the accommodation device 12 in, for example, the printing order. That is, each of the plurality of sets of media PA is loaded on the accommodation device 12 such that the medium P having an earlier printing order is placed on the medium P having a later printing order.

As the medium P, for example, paper is used. As the medium P, a medium (hereinafter, referred to as a preprinted medium) on which an image (hereinafter, referred to as a pre-image) is printed in advance can also be used.

The medium according to the present disclosure is not limited to paper, and may be a recording medium such as a film (for example, a resin film and a metal film), and various media can be used. Since the printing forms an image, the printing can be rephrased as image formation.

### <Transport Device 40>

The transport device 40 is a device that transports the medium P accommodated in the accommodation device 12. The transport device 40 is an example of a transport section. The transport device 40 includes a transport member 42 such as a plurality of transport rolls. The transport device 40 transports the medium P through a transport path 44 using the transport member 42. As the transport member 42, for example, a transport member such as a transport belt and a transport drum may be used, and various transport members can be used.

In the present exemplary embodiment, the transport device 40 transports the media P from the accommodation device 12 to the printing device 16 in the printing order. Specifically, the transport device 40 transports the plurality of media P loaded on the accommodation device 12 to the printing device 16 in order from the top. As a result, the media P accommodated in the accommodation device 12 are supplied to the printing device 16 in the printing order. Further, the transport device 40 transports the media P from the printing device 16 to the inspection device 20 in the printing order. As a result, the media P printed by the printing device 16 are supplied to the inspection device 20 in the printing order. Further, the transport device 40 transports the media P from the inspection device 20 to the discharge device 30 in the printing order. As a result, the media P inspected by the inspection device 20 are discharged to the discharge device 30 in the printing order.

### <Printing Device 16>

The printing device 16 is a device that performs the printing on the medium P transported from the accommodation device 12 based on image data. The printing device 16 is an example of a printing section. The image data is information that forms the basis of a print image printed by the printing device 16. The image data is acquired, for example, by receiving image data generated by an external device. The image data may be, for example, image data generated by reading an image of an original document in the printing device 16, and various image data can be used.

The printing device 16 includes, for example, an electrophotographic printing section 17 that performs the printing using toner. In the electrophotographic printing section 17, for example, each of steps of charging, exposing, developing, transferring, and fixing is performed to perform the printing on the medium P.

The printing section is not limited to the electrophotographic printing section 17. As the printing section, for example, an ink jet printing section that performs printing using an ink may be used, and various printing sections can be used.

In the ink jet printing section, for example, ink droplets are ejected from an ejection section to the medium P to perform the printing on the medium P. As the ink jet printing section, the printing section may perform the printing on the medium P by ejecting the ink droplets from the ejection section to a transfer body and transferring the ink droplets from the transfer body to the medium P.

### <Inspection Device 20>

The inspection device 20 is a device that inspects the print image printed on the medium P by the printing device 16. The inspection device 20 includes a reading section 22 that reads the print image. Whether there is an abnormality in the print image is inspected based on a read image read by the reading section 22. A specific inspection process will be described later.

As the reading section 22, for example, a contact type image sensor called a contact image sensor (CIS) is used. The image sensor used as the reading section 22 is not limited to the contact type image sensor, and for example, an image sensor such as a charge coupled device (CCD) and complementary metal oxide semiconductor (CMOS) may be used. As the reading section, various reading sections that can read the image of the medium P can be used.

### <Discharge Device 30>

The discharge device 30 is a device that discharges the medium P inspected by the inspection device 20. The discharge device 30 includes a first discharge section 31 and a second discharge section 32. The first discharge section 31 discharges the medium P determined to have no abnormality in the print image in the inspection by the inspection device 20. The second discharge section 32 discharges the medium P determined to have an abnormality in the print image in the inspection by the inspection device 20.

In the discharge device 30, the paper after the inspection by the inspection device 20 may be subjected to a post-process and then discharged. Examples of the post-process include a folding process, a stapling process, a hole punching process, and a booklet making process.

### <Display Section 18>

The display section 18 displays presentation information to be presented to a user to notify the user of the presentation information. The display section 18 is configured by, for example, a liquid crystal display or an organic electroluminescence (EL) display. Various notifications can be displayed on the display section 18.

Further, the display section 18 functions as an input section to which an instruction from the user is input. In the present exemplary embodiment, the display section 18 is configured as, for example, a resistive touch panel or a capacitive touch panel, and an instruction from the user is input to the display section 18 by a contact operation of the user. The user is an example of a user.

The input section may be configured separately from the display section 18. In this case, the input section may be configured as, for example, an input key (for example, a keyboard, a mouse, or an operation button) through which an input operation is performed by the user.

### <Detection Section 19>

The detection section 19 detects a jam of the medium P in the transport path 44. A plurality of detection sections 19 are disposed, for example, along a transport direction of the transport path 44. FIG. 1 shows only one of the plurality of detection sections 19.

Specifically, the detection section 19 is configured by, for example, a light sensor that detects the medium P. The detection section 19 detects, for example, a case where the medium P is continuously detected for a time exceeding a predetermined time, as a case where the jam of the medium P occurs. In addition, the detection section 19 detects that the medium P is removed in a case where the medium P is no longer detected after the jam of the medium P is detected.

### <Control Device 50>

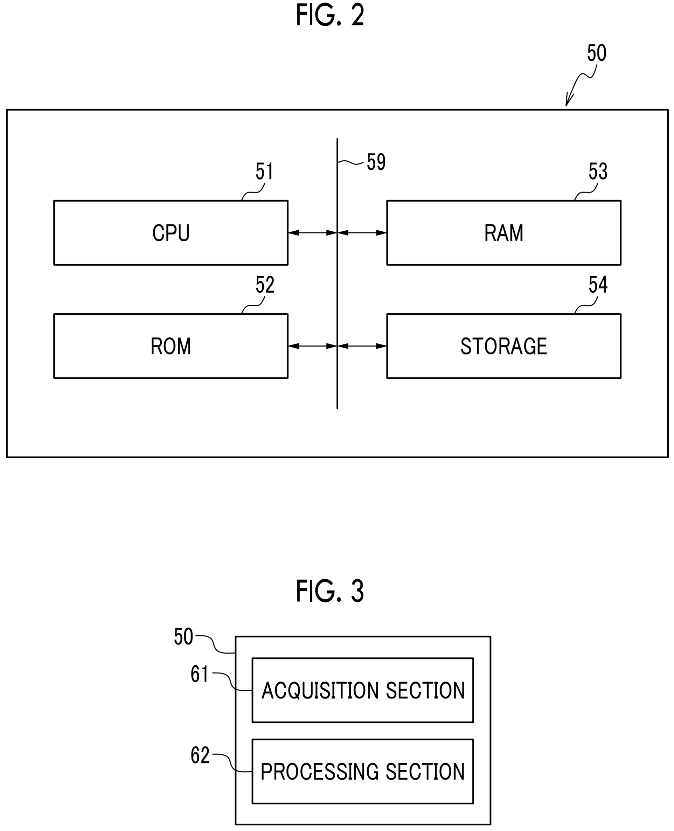

The control device 50 is a device that controls each section of the printing system 10. Specifically, the control device 50 functions as a computer, and includes a central processing unit (CPU) 51, a read only memory (ROM) 52, a random access memory (RAM) 53, and a storage 54, as shown in FIG. 2. The CPU 51, the ROM 52, the RAM 53, and the storage 54 are connected to each other via a connection line 59.

The CPU 51 is a central processing unit and executes various programs including an information processing program or controls each section. The ROM 52 stores the various programs including the information processing program and various data. The RAM 53 temporarily stores a program or data as a work area. The storage 54 is configured as a storage medium such as a hard disk drive (HDD), a solid state drive (SSD), or a flash memory, and stores various programs including an operating system and various data. The information processing program may be stored in the storage 54.

In the control device 50, the CPU 51 reads out the various programs including the information processing program from the ROM 52 or the storage 54, and executes the program using the RAM 53 as the work area. The CPU 51 executes the information processing program to implement various functions. Hereinafter, a functional configuration implemented through cooperation between the CPU 51 as a hardware resource and the information processing program as a software resource will be described. FIG. 3 is a block diagram showing an example of the functional configuration of the control device 50 according to the present exemplary embodiment.

In the control device 50, the CPU 51 executes the information processing program to function as an acquisition section 61 and a processing section 62 as shown in FIG. 3.

The acquisition section 61 acquires various user instructions input by the user via the display section 18 as the input section. Examples of the user instruction include a printing instruction to perform the printing on the medium P.

In addition, the acquisition section 61 acquires various image data. Examples of the image data include image data that forms the basis for the printing by the printing device 16 and image data of the read image read by the reading section 22 of the inspection device 20.

In addition, the acquisition section 61 acquires various detection results (that is, detection information). Examples of the detection result include a detection result in which the detection section 19 detects the jam of the medium P or the removal of the medium P.

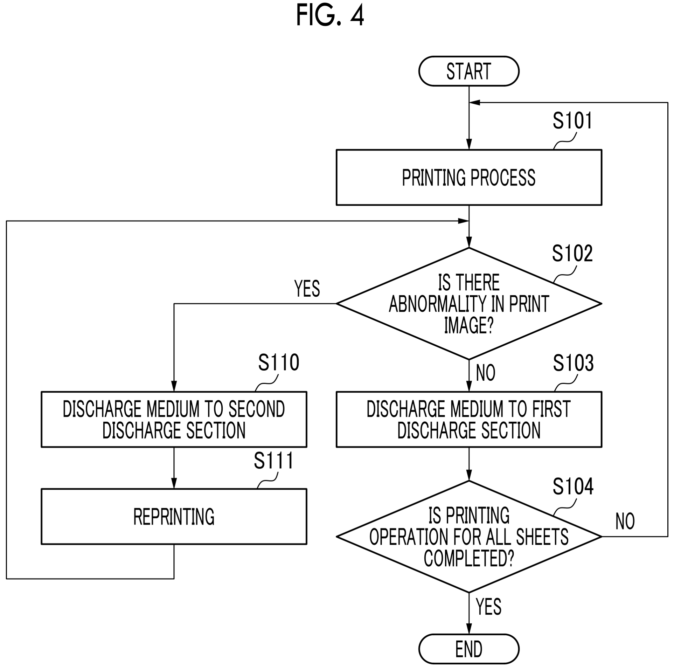

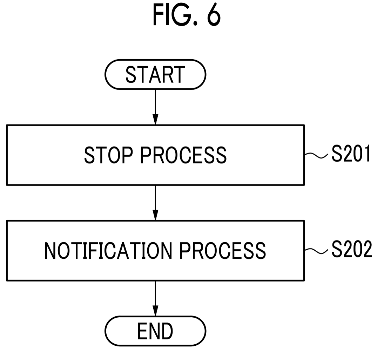

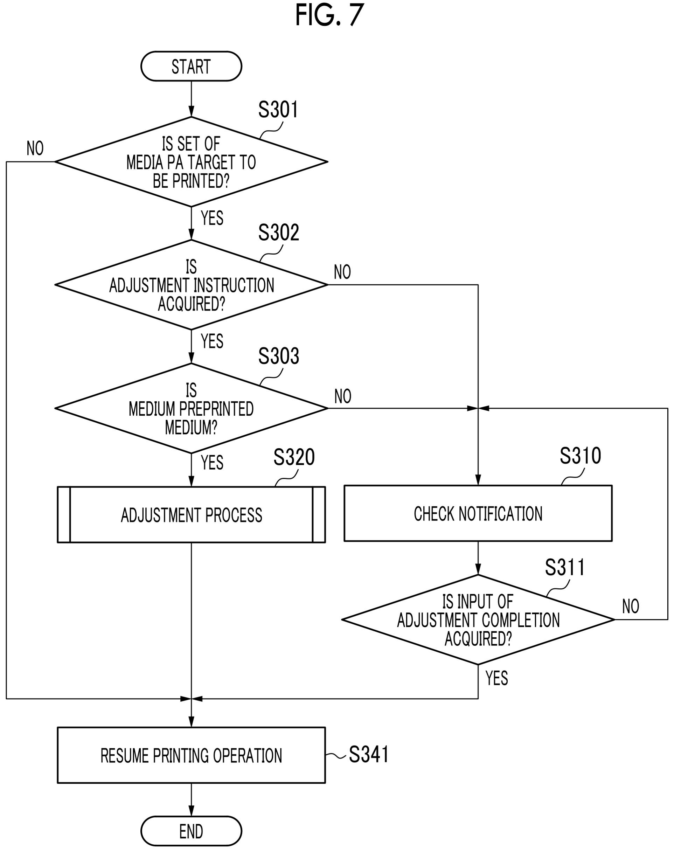

In a case where the acquisition section 61 acquires the printing instruction, the processing section 62 executes a printing flow (see FIG. 4) of performing the printing on the medium P. In a case where the detection section 19 detects the jam of the medium P in the transport path 44 during the transport of the medium P in the printing flow, the processing section 62 executes a stop flow (see FIG. 6). In a case where the printing operation is stopped during the transport of the medium P and the medium P is removed from the transport path 44, the processing section 62 executes a resume flow (see FIG. 7).

The control device 50 may be configured as a single control device 50 or may be configured as a plurality of control devices 50. Therefore, the process executed by the control device 50 may be executed by a single control device 50 or may be executed by a plurality of control devices 50.

### <Printing Flow>

Hereinafter, an example of the printing flow executed in the printing system 10 will be described. FIG. 4 is a flowchart showing the example of the printing flow executed in the printing system 10. In the printing system 10, for example, the printing operation is executed in accordance with the flow.

This flow is started, for example, in a case where the CPU 51 acquires the printing instruction from the user. The CPU 51 acquires the printing instruction, for example, through the display section 18.

In a case where the CPU 51 starts the present flow, as shown in FIG. 4, in step S101, the CPU 51 executes a printing process. In the printing process, the transport device 40 transports the medium P accommodated in the accommodation device 12 to the printing device 16. The printing device 16 prints the image on the medium P transported from the accommodation device 12 based on the image data.

In a case where, for example, the plurality of sets of media PA are targets to be printed, the media P are transported in sequence from the accommodation device 12 in which the plurality of sets of media PA are accommodated, and are printed in a predetermined printing order.

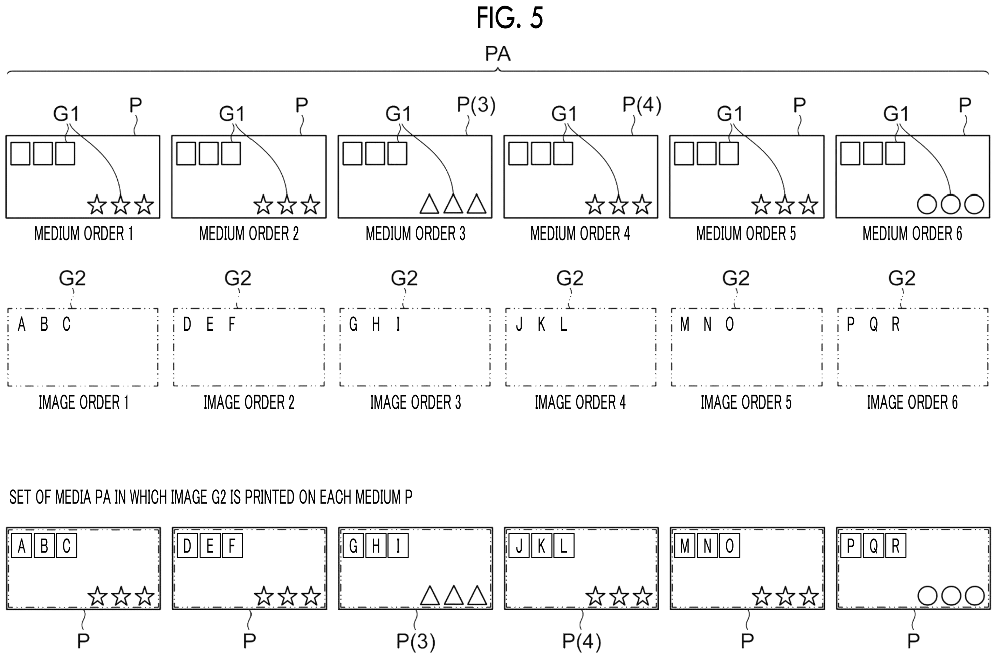

Here, FIG. 5 shows an example of the sets of media PA. The set of media PA shown in FIG. 5 is composed of, for example, six media P. Each medium P of the set of media PA is a preprinted medium on which a pre-image G1 is printed in advance.

The printing process is executed on the set of media PA in the printing order shown in an image order of FIG. 5 and a medium order of FIG. 5. The set of media PA is loaded on the accommodation device 12 in the order of medium orders 6, 5, 4, 3, 2, and 1 from bottom to top, for example. The transport device 40 transports the media P in sequence from the accommodation device 12 to the printing device 16 in the order of medium orders 1, 2, 3, 4, 5, and 6. Then, the printing device 16 prints an image G2 on the media P, which are sequentially transported in the order of medium orders 1, 2, 3, 4, 5, and 6, in the order of image orders 1, 2, 3, 4, 5, and 6.

Next, in step S102, the CPU 51 executes an inspection process of inspecting whether there is an image abnormality in an image (hereinafter, referred to as a print image) printed in the printing process.

In the inspection process, first, the reading section 22 in the inspection device 20 reads the print image of the medium P. The CPU 51 acquires image data of an image (hereinafter, referred to as a read image) read by the reading section 22. The CPU 51 determines whether there is an abnormality in the read image using an image related to the image data that forms the basis of the printing process as a reference image. Examples of the image abnormality include an abnormality such as printing contamination, corner folding, and misalignment. The CPU 51 compares the reference image with the read image, and determines that there is an abnormality in the print image, for example, in a case where the read image has a difference exceeding an allowable limit with respect to the reference image. The CPU 51 determines that there is no abnormality in the print image in a case where there is no difference or the difference is within the allowable limit.

In a case where the inspection process is performed on the preprinted medium, an image obtained by combining the pre-image printed in advance on the preprinted medium and the image related to the image data is used as the reference image. The pre-image is read in advance by the reading section 22, for example, and is stored in the storage 54 as pre-image data. The CPU 51 acquires the pre-image data from the storage 54.

In a case where it is determined that there is no abnormality in the print image (step S102: NO), the CPU 51 discharges the medium P to the first discharge section 31 (step S103), and proceeds to step S104.

In a case where it is determined that there is an abnormality in the print image (step S102: YES), the CPU 51 discharges the medium P on which the print image is printed to the second discharge section 32 (step S110), and proceeds to step S111. In this case, all the media P present in the transport path 44 are discharged to the second discharge section 32.

In step S111, the CPU 51 reprints the media P in the printing order starting from the medium P determined to have an abnormality in the print image, and returns to step S102. For example, in a case where it is determined that there is an abnormality in the print image of the medium P(3) in the set of media PA shown in FIG. 5, the media P are reprinted in the printing order starting from the order (medium order 3 in FIG. 5) of the medium P(3). In this case, in a case where the medium P accommodated at the top of the accommodation device 12 is not the medium P of the medium order 3, the media P are discharged to the second discharge section 32 until the medium P becomes the medium P of the medium order 3.

In step S104, the CPU 51 determines whether the printing operation for all the sheets related to the printing instruction is completed. In a case where it is determined that the printing operation for all the sheets is completed (step S104: YES), the CPU 51 ends the present flow, and in a case where it is determined that the printing operation for all the sheets is not completed (step S104: NO), the CPU 51 returns to step S101 and executes the printing process (step S101) and the inspection process (step S102) on an unprinted image.

The printing process (step S101) and the inspection process (step S102) can be executed for each medium P or for each set of the plurality of media P.

### <Stop Flow>

Hereinafter, an example of the stop flow executed in the printing system 10 will be described. FIG. 6 is a flowchart showing the example of the stop flow executed in the printing system 10.

In a case where the detection section 19 detects the jam of the medium P in the transport path 44 during the transport of the medium P in the printing flow, the CPU 51 executes the stop flow. The CPU 51 acquires the detection result in which the detection section 19 detects the jam of the medium P.

In a case where the CPU 51 starts the present flow, as shown in FIG. 6, in step S201, the CPU 51 executes a stop process. In the stop process, each section of the printing system 10 stops the operation, and the printing operation by the printing flow is stopped. As a result, for example, the printing operation by the printing flow is stopped while the medium P is being transported.

Next, in step S202, the CPU 51 executes a notification process. In the notification process, the display section 18 notifies the user that the printing operation is stopped. In this case, the display section 18 sends a notification to prompt the removal of the medium P in which the jam has occurred from the transport path 44.

### <Resume Flow>

Hereinafter, an example of the resume flow executed in the printing system 10 will be described. FIG. 7 is a flowchart showing the example of the resume flow executed in the printing system 10.

In a case where the printing operation is stopped during the transport of the medium P and the medium P is removed from the transport path 44, the CPU 51 executes the resume flow. The removal of the medium P from the transport path 44 is detected by, for example, the detection section 19. The CPU 51 acquires the detection result from the detection section 19.

In a case where the CPU 51 starts the present flow, as shown in FIG. 7, in step S301, the CPU 51 determines whether the target to be printed in the stopped printing operation is the set of media PA. That is, the CPU 51 determines whether the target to be printed is the set of media having a predetermined printing order.

In a case where it is determined that the target to be printed is the set of media PA (step S301: YES), the CPU 51 proceeds to step S302, and in a case where it is determined that the target to be printed is not the set of media PA (step S301: NO), the CPU 51 proceeds to step S341. The determination can be made, for example, from setting information of the target to be printed set by the user through the display section 18.

In step S341, the CPU 51 resumes the printing operation, and ends the present flow. When the printing operation is resumed, the printing is performed starting from the medium P and the image of the order next to the order of the medium P (hereinafter, referred to as a completed medium) on which the printing of the image is last completed before the printing operation is stopped. For example, in a case where the medium P(3) is the completed medium in the set of media PA shown in FIG. 5, the printing is performed on the medium P of the medium order 4.

The completion of the printing refers to a state where it is determined that there is no abnormality in the print image in the inspection process (step S102) and the medium P on which the print image is printed is discharged to the first discharge section 31. Therefore, the completed medium can also be referred to as the medium P last discharged to the first discharge section 31 before the printing operation is stopped.

In step S302, the CPU 51 determines whether an adjustment instruction to adjust the order of the medium P is acquired from the user. In a case where it is determined that the adjustment instruction is acquired (step S302: YES), the CPU 51 proceeds to step S303, and in a case where it is determined that the adjustment instruction is not acquired (step S302: NO), the CPU 51 proceeds to step S310.

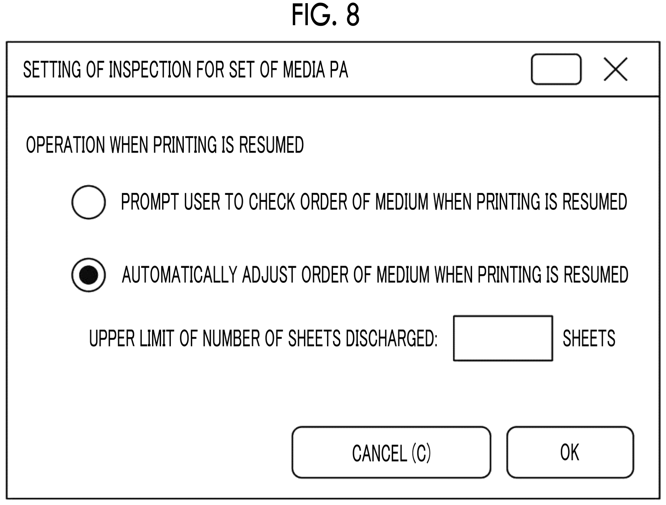

The adjustment instruction is input by the user through, for example, the display section 18. Specifically, for example, as shown in FIG. 8, various inputs and various settings by the user can be performed through a setting screen displayed on the display section 18. In the setting screen shown in FIG. 8, an operation when the printing for the set of media PA is resumed can be set. Specifically, it is possible to select whether to automatically adjust the order of the medium P when the printing is resumed or to prompt the user to check the order of the medium P when the printing is resumed. In addition, an upper limit of the number of sheets discharged, in a case where the order of the medium P is automatically adjusted when the printing is resumed, can be set.

In step S310, the CPU 51 sends a check notification to prompt the user to check the order of the medium P in the accommodation device 12. The check notification is performed through, for example, the display section 18. The user who sees the notification operates the medium P of the accommodation device 12 to exchange the order of the medium P such that the order (hereinafter, referred to as a resume order) of the medium P transported from the accommodation device 12 when the printing operation is resumed becomes an order matching the printing order related to the printing operation, for example.

Next, in step S311, the CPU 51 determines whether input indicating that the check of the order of the medium P in the accommodation device 12 is completed is acquired. In a case where it is determined that the input is acquired, the CPU 51 proceeds to step S341, and in a case where it is determined that the input is not acquired, the CPU 51 returns to step S310. That is, the CPU 51 repeats steps S310 and S311 until the input is acquired.

The input is made by the user through, for example, the display section 18. Specifically, an OK button or the like indicating that the order of the medium P of the accommodation device 12 is checked is displayed on the display section 18, and the input is acquired by the operation of the OK button or the like by the user.

In step S303, the CPU 51 determines whether the medium P is the preprinted medium. In a case where it is determined that the medium P is the preprinted medium (step S303: YES), the CPU 51 proceeds to step S320, and in a case where it is determined that the medium P is not the preprinted medium (step S303: NO), the CPU 51 proceeds to step S310. The determination can be made, for example, from the setting information of the target to be printed set by the user through the display section 18.

In step S320, the CPU 51 executes an adjustment process of adjusting the order of the medium P accommodated in the accommodation device 12.

In the adjustment process, the medium P is discharged from the accommodation device 12 until the resume order becomes an order matching the printing order related to the printing operation. Specifically, the medium P is discharged from the accommodation device 12 until the resume order becomes the order next to the order of the completed medium in the printing order. For example, in a case where the medium P(3) is the completed medium in the set of media PA shown in FIG. 5, the medium P is discharged from the accommodation device 12 to the second discharge section 32 until the resume order becomes the medium order 4.

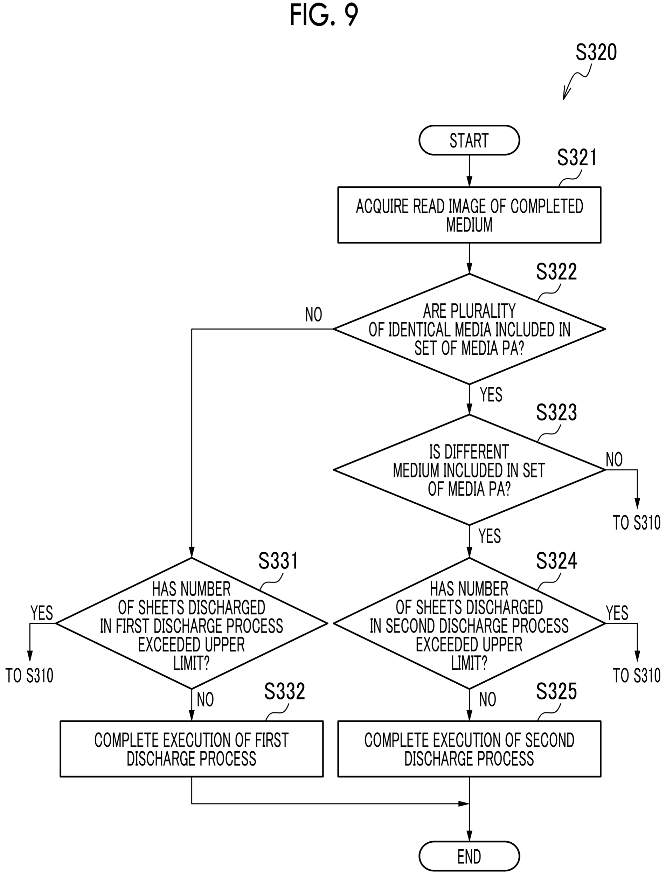

In the present exemplary embodiment, the CPU 51 executes the adjustment process as an example as shown in FIG. 9. As shown in FIG. 9, first, the CPU 51 acquires the read image of the completed medium in step S321. The completed medium is the medium P determined to have no abnormality in the print image in the inspection process (step S102) and discharged to the first discharge section 31, and is the medium P last discharged to the first discharge section 31 before the printing operation is stopped. The CPU 51 acquires the read image of the completed medium read by the reading section 22 in the inspection process (step S102).

Next, in step S322, the CPU 51 determines whether the set of media PA as the target to be printed includes a plurality of media (hereinafter, referred to as identical media) on which the identical pre-image is printed in advance. The CPU 51 performs the determination, for example, based on whether the identical pre-image is present in the pre-image data for the set of media PA stored in the storage 54. That is, the CPU 51 determines, for example, that the set of media PA includes a plurality of identical media in a case where the identical pre-image is present in the pre-image data (step S322: YES). The CPU 51 determines, for example, that the set of media PA does not include the identical media in a case where the identical pre-image is not present in the pre-image data (step S322: NO). The pre-image data uses, for example, information that is identical to the information used in the inspection process.

For example, in the set of media PA shown in FIG. 5, the pre-images G1 of the media P of the medium orders 1, 2, 4, and 5 are the identical image. Therefore, in a case of the set of media PA, it is determined that the identical media are included.

In a case where it is determined that the set of media PA includes the plurality of identical media (step S322: YES), the CPU 51 proceeds to step S323, and in a case where it is determined that the set of media PA does not include the identical media (step S322: NO), the CPU 51 proceeds to step S331.

The "state where the set of media PA does not include the identical media" corresponds to a "state where the set of media PA includes only the media P on which the pre-mutually different images are printed in advance". That is, the state corresponds to a "state where mutually different images are printed in advance on all the media P in the set of media PA".

In step S331, the CPU 51 determines whether the number of sheets discharged from the accommodation device 12 exceeds a preset upper limit in a case where the first discharge process is completed. The first discharge process is a process of discharging the media P up to the medium P on which the pre-image identical to the pre-image of the completed medium is printed in advance from the accommodation device 12 to the second discharge section 32 by the transport device 40.

In step S331, the transport device 40 transports the medium P from the accommodation device 12 to the inspection device 20, and the reading section 22 of the inspection device 20 reads the image of the medium P. In this case, the printing device 16 may execute blank printing without applying color on the medium P, or may not execute the printing process.

The CPU 51 obtains the order of the medium P in the printing order of the set of media PA from the read image. Further, the CPU 51 obtains the order of the completed medium in the printing order of the set of media PA from the image acquired in step S321. Then, the CPU 51 obtains the number of sheets discharged in a case where the first discharge process is executed, based on the order of the medium P and the order of the completed medium. The CPU 51 determines whether the number of sheets discharged exceeds the preset upper limit.

In a case where it is determined that the number of sheets discharged exceeds the upper limit (step S331: YES) in a case where the first discharge process is completed, the CPU 51 proceeds to step S310 (see FIG. 7), and in a case where it is determined that the number of sheets discharged does not exceed the upper limit (step S331: NO) in a case where the first discharge process is completed, the CPU 51 completes the first discharge process (step S332). Thereafter, the process proceeds to step S341.

In the first discharge process, the transport device 40 discharges the media P corresponding to the number of sheets discharged obtained in step S331 from the accommodation device 12 to the second discharge section 32. In the first discharge process, the transport device 40 may transport the media P from the accommodation device 12 to the inspection device 20, the reading section 22 of the inspection device 20 may read the images of the media P, and in a case where the pre-image identical to the pre-image of the completed medium is detected, the media P may be discharged to the second discharge section 32 up to the medium P on which the pre-image identical to the pre-image of the completed medium is detected.

In step S331, the determination may be performed after the start of the execution of the first discharge process, and the execution of the first discharge process may be completed in step S332. In addition, in step S331, the determination may be performed before the start of the execution of the first discharge process, and the execution of the first discharge process may be started in step S332.

In step S323, the CPU 51 determines whether the set of media PA includes a medium (hereinafter, referred to as a different medium) on which a different pre-image from the other media is printed in advance. The different medium is a medium on which a unique pre-image different from the other pre-images is printed among the pre-images of the media P.

The CPU 51 performs the determination, for example, based on whether the unique pre-image is present in the pre-image data for the set of media PA stored in the storage 54. That is, the CPU 51 determines, for example, that the set of media PA includes the different medium in a case where the unique pre-image is present in the pre-image data (step S323: YES). The CPU 51 determines, for example, that the set of media PA does not include the different medium in a case where the unique pre-image is not present in the pre-image data (step S323: NO). The pre-image data uses, for example, information that is identical to the information used in the inspection process.

For example, in the set of media PA shown in FIG. 5, the pre-images G1 of the media P of the medium orders 3 and 6 are the unique pre-image different from the other pre-images. Therefore, in a case of the set of media PA, it is determined that the different medium is included.

In a case where it is determined that the set of media PA includes the different medium (step S323: YES), the CPU 51 proceeds to step S324, and in a case where it is determined that the set of media PA does not include the different medium (step S323: NO), the CPU 51 proceeds to step S310 (see FIG. 7).

In step S324, the CPU 51 determines whether the number of sheets discharged from the accommodation section exceeds a preset upper limit in a case where the second discharge process is completed. In the second discharge process, the media P are discharged from the accommodation device 12 to the second discharge section 32 up to the medium P of which the order is identical to the order of the completed medium determined based on the different medium. In a case where there are a plurality of different media, any of the different media is selected.

In a case where it is determined that the number of sheets discharged exceeds the upper limit (step S324: YES) in a case where the second discharge process is completed, the CPU 51 proceeds to step S310 (see FIG. 7), and in a case where it is determined that the number of sheets discharged does not exceed the upper limit (step S324: NO) in a case where the second discharge process is completed, the CPU 51 completes the second discharge process (step S325). Thereafter, the process proceeds to step S341.

For example, in a case where the medium P(4) is the completed medium in the set of media PA shown in FIG. 5, as an example, the second discharge process is executed as follows. For example, the order of the medium P(4) (second) is set based on the medium P(3) as the different medium. Then, the medium P(4) having the order identical to the order (second) determined based on the medium P(3) is discharged from the accommodation device 12 to the second discharge section 32.

### <Operation According to Present Exemplary Embodiment>

In the present exemplary embodiment, as described above, the CPU 51 executes the printing operation of transporting the media P in sequence from the accommodation device 12 in which the plurality of sets of media PA are accommodated and printing the media P in the printing order (see the printing flow described above). Further, in a case where the printing operation is stopped during the transport of the medium P and the medium P is removed from the transport path 44, the CPU 51 discharges the media P from the accommodation device 12 until the resume order becomes an order matching the printing order, and then resumes the printing operation (see the resume flow described above).

As a result, the user's effort is reduced as compared to a case where the user always needs to adjust the order of the medium P transported from the accommodation device 12 when the printing operation is resumed.

In addition, in the present exemplary embodiment, in a case where the printing operation is stopped during the transport of the medium P and the medium P is removed from the transport path 44, the CPU 51 discharges the media P from the accommodation device 12 until the resume order becomes the order next to the order of the completed medium in the printing order, and then resumes the printing operation (see the resume flow described above).

As a result, the printing operation may be resumed from the order next to the order of the completed medium in the printing order.

In addition, in the present exemplary embodiment, in a case where the printing operation is stopped during the transport of the medium P and the medium P is removed from the transport path 44, the CPU 51 discharges the media P from the accommodation device 12 up to the medium on which the pre-image identical to the pre-image of the completed medium is printed in advance (step S332), and resumes the printing operation (step S341).

As a result, the order of the medium transported from the accommodation device 12 when the printing operation is resumed may be adjusted based on the pre-images printed in advance on the plurality of media P constituting the set of media PA.

In addition, in the present exemplary embodiment, in a case where the printing operation is stopped during the transport of the medium P and the medium P is removed from the transport path 44, the CPU 51 discharges the media P from the accommodation device 12 up to the medium having the order identical to the order of the completed medium determined based on the different medium (step S325), and resumes the printing operation (step S341).

As a result, even in a case where the identical image is included in the pre-image printed in advance on the plurality of media P constituting the set of media PA, the order of the medium transported from the accommodation device 12 when the printing operation is resumed may be adjusted based on the pre-image.

In addition, in the present exemplary embodiment, in a case where the printing operation is stopped during the transport of the medium P and the medium P is removed from the transport path 44, in a case where the adjustment instruction is acquired (step S302: YES), the CPU 51 discharges the media P from the accommodation device 12 until the resume order becomes an order matching the printing order, and then resumes the printing operation. In a case where the adjustment instruction is not acquired (step S302: NO), the CPU 51 sends the notification to prompt the user to check the resume order (step S310).

As a result, whether the adjustment of the resume order is executed by the device or by the user may be selected.

In addition, in the present exemplary embodiment, in a case where the printing operation is stopped during the transport of the medium P and the medium P is removed from the transport path 44, in a case where the adjustment instruction is acquired (step S302: YES), the CPU 51 discharges, in a case where the number of sheets discharged from the accommodation device 12 is within the preset upper limit (step S324: NO, step S331: NO), the media P from the accommodation device 12 until the resume order becomes an order matching the printing order, and then resumes the printing operation.

In a case where the number of sheets discharged from the accommodation device 12 exceeds the preset upper limit (step S324: YES, step S331: YES), the CPU 51 sends the notification to prompt the user to check the resume order (step S310).

### <Modification Example>

In the present exemplary embodiment, as described above, the order of the medium P is specified based on the pre-image, but the present disclosure is not limited thereto. For example, the order of the medium P may be specified by physical properties of the medium P, such as a thickness, a size, and a material. In this case, a set of media including a medium having different physical properties from the other media is used as the set of media PA.

In addition, in the present exemplary embodiment, as described above, a case has been described in which the printing operation is resumed in a case where the printing operation is stopped due to the jam of the medium P, but the present disclosure is not limited thereto. A cause of the stop of the printing operation is not limited to the jam of the medium P, and may be a failure of a component of the printing system 10 or the like. Any cause that creates a situation where the printing operation is stopped during the transport of the medium P and the medium P is removed from the transport path can be considered.

In addition, in the present exemplary embodiment, the CPU 51 discharges the medium P from the accommodation device 12 to the second discharge section 32 in the adjustment process (step S320), but may discharge the medium P to the first discharge section 31, for example. In this case, for example, the medium P may be discharged by shifting the medium P in a width direction (that is, a direction intersecting the transport direction) of the medium P relative to the discharged medium P.

In addition, in the present exemplary embodiment, the CPU 51 executes the adjustment process (step S320) in a case where the adjustment instruction is acquired (step S302: YES), but the present disclosure is not limited thereto. The CPU 51 may always execute the adjustment process regardless of the instruction from the user.

In addition, in the present exemplary embodiment, the CPU 51 executes the first discharge process or the second discharge process in a case where the number of sheets discharged from the accommodation device 12 is within the preset upper limit (step S324: NO, step S331: NO), but the present disclosure is not limited thereto. The CPU 51 may always execute the first discharge process or the second discharge process regardless of the number of sheets discharged.

### <Other Modification Examples>

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content. The program in the present disclosure may be provided as a program product.

The present disclosure is not limited to the above-described exemplary embodiment, and various modifications, changes, and improvements can be made without departing from the gist of the present disclosure. For example, two or more of the above-described modification examples may be configured to be combined as appropriate.

### (Supplementary Note)

(((1))) An information processing system comprising:
   a processor configured to:
   execute a printing operation of transporting, from an accommodation section that accommodates a plurality of sets of media, each set including a plurality of media and having a predetermined printing order, the media in sequence and printing the media in the printing order; and
   in a case where the printing operation is stopped during transport of a medium and the medium is removed from a transport path,
   discharge the media from the accommodation section until an order of the medium transported from the accommodation section when the printing operation is resumed becomes an order matching the printing order, and then resume the printing operation.
(((2))) The information processing system according to (((1))), wherein the processor is configured to:
   execute the printing operation; and
   in a case where the printing operation is stopped during the transport of the medium and the medium is removed from the transport path,
   discharge the media from the accommodation section until the order of the medium transported from the accommodation section when the printing operation is resumed becomes an order next to an order of a completed medium on which printing is last completed before the printing operation is stopped in the printing order, and then resume the printing operation.
(((3))) The information processing system according to (((2))),
   wherein the plurality of media constituting the set of media are printed in advance with mutually different images, and
   the processor is configured to:
      execute the printing operation; and
      in a case where the printing operation is stopped during the transport of the medium and the medium is removed from the transport path,
      discharge the media from the accommodation section up to a medium on which an image identical to the image of the completed medium is printed in advance, and then resume the printing operation.
(((4))) The information processing system according to (((2))) or (((3))),
   wherein the plurality of media constituting the set of media include a plurality of media on which an identical image is printed in advance and a different medium on which a different image from the other media is printed in advance, and
   the processor is configured to:
      execute the printing operation; and
      in a case where the printing operation is stopped during the transport of the medium and the medium is removed from the transport path,
      discharge the media from the accommodation section up to a medium of which an order is identical to an order of the completed medium determined based on the different medium, and then resume the printing operation.
(((5))) The information processing system according to any one of (((1))) to (((4))), wherein the processor is configured to:
   execute the printing operation;
   in a case where the printing operation is stopped during the transport of the medium and the medium is removed from the transport path,
   discharge, in a case where an adjustment instruction to adjust the order of the medium is acquired, the media from the accommodation section until the order of the medium becomes the order matching the printing order, and then resume the printing operation; and
   send, in a case where the adjustment instruction is not acquired, a notification to prompt a user to check the order of the medium.
(((6))) The information processing system according to (((5))), wherein the processor is configured to:
   execute the printing operation;
   in a case where the printing operation is stopped during the transport of the medium and the medium is removed from the transport path,
   in a case where an adjustment instruction to adjust the order of the medium is acquired,
   discharge, in a case where the number of sheets discharged from the accommodation section is within a preset upper limit, the media from the accommodation section until the order of the medium becomes the order matching the printing order, and then resume the printing operation; and
   send, in a case where the number of sheets discharged from the accommodation section exceeds the preset upper limit, a notification to prompt a user to check the order of the medium.
(((7))) An information processing program causing a computer to execute a process comprising:
   executing a printing operation of transporting, from an accommodation section that accommodates a plurality of sets of media, each set including a plurality of media and having a predetermined printing order, the media in sequence and printing the media in the printing order; and
   discharging, in a case where the printing operation is stopped during transport of a medium and the medium is removed from a transport path, the media from the accommodation section until an order of the medium transported from the accommodation section when the printing operation is resumed becomes an order matching the printing order, and then resuming the printing operation.
(((8))) A printing system comprising:
   an accommodation section that accommodates a plurality of sets of media, each set including a plurality of media and having a predetermined printing order;
   a transport section that transports the media in sequence from the accommodation section; and
   a printing section that performs printing on the media transported in sequence from the accommodation section by the transport section in the printing order,
   wherein the transport section discharges, in a case where the printing operation by the printing section is stopped during transport of a medium and the medium is removed from a transport path, the media from the accommodation section until an order of the medium transported from the accommodation section when the printing operation is resumed becomes an order matching the printing order, and
   the printing section resumes the printing operation after the transport section discharges the media from the accommodation section.

With the configuration according to (((1))), the user's effort may be reduced as compared to a case where the user always needs to adjust the order of the medium transported from the accommodation section when the printing operation is resumed.

With the configuration according to (((2))), the printing operation may be resumed from the order next to the order of the completed medium on which the printing is last completed before the printing operation is stopped in the printing order.

With the configuration according to (((3))), the order of the medium transported from the accommodation section when the printing operation is resumed may be adjusted based on the images printed in advance on the plurality of media constituting the set of media.

With the configuration according to (((4))), even in a case where the identical image is included in the images printed in advance on the plurality of media constituting the set of media, the order of the medium transported from the accommodation section when the printing operation is resumed may be adjusted based on the image.

With the configuration according to (((5))), whether the adjustment of the order of the medium transported from the accommodation section when the printing operation is resumed is executed by the device or by the user may be selected.

With the configuration according to (((6))), whether the adjustment of the order of the medium transported from the accommodation section when the printing operation is resumed is executed by the device or by the user may be selected depending on the number of sheets discharged from the accommodation section.

With the configuration according to (((7))), the user's effort may be reduced as compared to a case where the user always needs to adjust the order of the medium transported from the accommodation section when the printing operation is resumed.

With the configuration according to (((8))), the user's effort may be reduced as compared to a case where the user always needs to adjust the order of the medium transported from the accommodation section when the printing operation is resumed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: printing system (example of information processing system)
12: accommodation device (example of accommodation section)
16: printing device (example of printing section)
20: inspection device (example of inspection section)
30: discharge device (example of discharge section)
40: transport device (example of transport section)
44: transport path
51: CPU (example of processor)
P: medium
PA: set of media

## Claims

1. An information processing system comprising:
a processor configured to:
execute a printing operation of transporting, from an accommodation section that accommodates a plurality of sets of media, each set including a plurality of media and having a predetermined printing order, the media in sequence and printing the media in the printing order; and
in a case where the printing operation is stopped during transport of a medium and the medium is removed from a transport path,
discharge the media from the accommodation section until an order of the medium transported from the accommodation section when the printing operation is resumed becomes an order matching the printing order, and then resume the printing operation.

2. The information processing system according to claim 1, wherein the processor is configured to:
execute the printing operation; and
in a case where the printing operation is stopped during the transport of the medium and the medium is removed from the transport path,
discharge the media from the accommodation section until the order of the medium transported from the accommodation section when the printing operation is resumed becomes an order next to an order of a completed medium on which printing is last completed before the printing operation is stopped in the printing order, and then resume the printing operation.

3. The information processing system according to claim 2,
wherein the plurality of media constituting the set of media are printed in advance with mutually different images, and
the processor is configured to:
execute the printing operation; and
in a case where the printing operation is stopped during the transport of the medium and the medium is removed from the transport path,
discharge the media from the accommodation section up to a medium on which an image identical to the image of the completed medium is printed in advance, and then resume the printing operation.

4. The information processing system according to claim 2 or 3,
wherein the plurality of media constituting the set of media include a plurality of media on which an identical image is printed in advance and a different medium on which a different image from the other media is printed in advance, and
the processor is configured to:
execute the printing operation; and
in a case where the printing operation is stopped during the transport of the medium and the medium is removed from the transport path,
discharge the media from the accommodation section up to a medium of which an order is identical to an order of the completed medium determined based on the different medium, and then resume the printing operation.

5. The information processing system according to any one of claims 1 to 4, wherein the processor is configured to:
execute the printing operation;
in a case where the printing operation is stopped during the transport of the medium and the medium is removed from the transport path,
discharge, in a case where an adjustment instruction to adjust the order of the medium is acquired, the media from the accommodation section until the order of the medium becomes the order matching the printing order, and then resume the printing operation; and
send, in a case where the adjustment instruction is not acquired, a notification to prompt a user to check the order of the medium.

6. The information processing system according to claim 5, wherein the processor is configured to:
execute the printing operation;
in a case where the printing operation is stopped during the transport of the medium and the medium is removed from the transport path,
in a case where an adjustment instruction to adjust the order of the medium is acquired,
discharge, in a case where the number of sheets discharged from the accommodation section is within a preset upper limit, the media from the accommodation section until the order of the medium becomes the order matching the printing order, and then resume the printing operation; and
send, in a case where the number of sheets discharged from the accommodation section exceeds the preset upper limit, a notification to prompt a user to check the order of the medium.

7. An information processing program causing a computer to execute a process comprising:
executing a printing operation of transporting, from an accommodation section that accommodates a plurality of sets of media, each set including a plurality of media and having a predetermined printing order, the media in sequence and printing the media in the printing order; and
discharging, in a case where the printing operation is stopped during transport of a medium and the medium is removed from a transport path, the media from the accommodation section until an order of the medium transported from the accommodation section when the printing operation is resumed becomes an order matching the printing order, and then resuming the printing operation.

8. A printing system comprising:
an accommodation section that accommodates a plurality of sets of media, each set including a plurality of media and having a predetermined printing order;
a transport section that transports the media in sequence from the accommodation section; and
a printing section that performs printing on the media transported in sequence from the accommodation section by the transport section in the printing order,
wherein the transport section discharges, in a case where the printing operation by the printing section is stopped during transport of a medium and the medium is removed from a transport path, the media from the accommodation section until an order of the medium transported from the accommodation section when the printing operation is resumed becomes an order matching the printing order, and
the printing section resumes the printing operation after the transport section discharges the media from the accommodation section.

9. An information processing method comprising:
executing a printing operation of transporting, from an accommodation section that accommodates a plurality of sets of media, each set including a plurality of media and having a predetermined printing order, the media in sequence and printing the media in the printing order; and
discharging, in a case where the printing operation is stopped during transport of a medium and the medium is removed from a transport path, the media from the accommodation section until an order of the medium transported from the accommodation section when the printing operation is resumed becomes an order matching the printing order, and then resuming the printing operation.
